# FASCICULE DE BREVET EUROPEEN

(11) **EP 2 874 827 B1**
(45) Date de publication et mention de la délivrance du brevet: **18.10.2017**
(21) Numéro de dépôt: 13739680.0
(22) Date de dépôt: 18.07.2013
(51) Int. Cl.: B60B 35/10

(54) **ESSIEU ET VEHICULE COMPRENANT AU MOINS UN TEL ESSIEU**
ACHSE UND FAHRZEUG MIT MINDESTENS EINER SOLCHEN ACHSE
AXLE AND VEHICLE COMPRISING AT LEAST ONE SUCH AXLE

(30) Priorité: 19.07.2012 FR 1256988
(43) Date de publication de la demande: 27.05.2015
(73) Titulaire: Haulotte Group, 42152 L'Horme (FR)
(72) Inventeur: DAVID, Eric, 73000 Barberaz (FR); BEJI, Slaheddine, 38200 Vienne (FR)
(74) Mandataire: Lavoix
(86) Numéro de dépôt international: PCT/EP2013/065204
(87) Numéro de publication internationale: WO 2014/013023

(56) Documents cités:
- EP-A1- 1 325 861
- WO-A1-97/31813
- US-A- 5 489 114

## Description

La présente invention concerne un essieu extensible et rétractable. L'invention concerne également un véhicule comprenant un tel essieu. Le domaine de l'invention est celui des véhicules et engins de levage, notamment les nacelles élévatrices de personnel. Un tel essieu est connu de document US 5489114 A et correspond au préambule de la revendication 1. De manière classique, une nacelle élévatrice comprend un châssis motorisé, des roues, une tourelle pivotant à 360 degrés sur le châssis, un bras télescopique articulé sur la tourelle, et une plate-forme mobile agencée à l'extrémité du bras télescopique. Une telle nacelle doit pouvoir circuler facilement dans un passage étroit et être transportée sans nécessiter un convoi exceptionnel. La longueur et la largeur de la nacelle doivent donc être réduites, tout en conservant des performances de levage élevées.

La nacelle doit également présenter une stabilité importante, car il existe un risque de basculement lors de son utilisation, par exemple lors d'un excès d'inclinaison du bras télescopique. Un tel basculement doit être impérativement évité, notamment lorsqu'un opérateur se trouve sur la plate-forme mobile située en hauteur. En pratique, la stabilité augmente avec l'écartement entre les points d'appui au sol de la nacelle, à savoir les roues équipant le châssis. Ecarter les roues permet d'améliorer la stabilité en cours d'utilisation, mais augmente dans le même temps l'encombrement de la nacelle.

Ainsi, selon les conditions d'utilisation, un compromis est recherché entre deux paramètres critiques et contradictoires : la stabilité et l'encombrement de la nacelle.

De manière connue, une nacelle élévatrice peut être équipée d'essieux extensibles et rétractables. Par exemple, US-A-6 119 882 décrit un véhicule, de type nacelle élévatrice, comprenant deux essieux montés sur un châssis. Chaque essieu comporte deux bras de support symétriques, montés en vis-à-vis dans un caisson central. Chaque bras de support est relié à une roue du véhicule et est mu par un vérin hydraulique pour permettre son déplacement hors du caisson central. Lorsque les essieux sont rétractés, notamment lors du déplacement de la nacelle, son encombrement en largeur est réduit. Lorsque les essieux sont étendus, notamment en position de travail de la nacelle, sa stabilité est améliorée. La course d'extension de chaque bras de support de tels essieux est néanmoins limitée au maximum à la demi-longueur du caisson central.

Pour remédier à cet inconvénient, une solution connue de l'art antérieur consiste à monter, au sein du caisson central, un des bras de support coulissant à l'intérieur de l'autre bras de support. Cet agencement permet d'obtenir des bras de support télescopiques et d'ainsi augmenter leur course d'extension. Cette augmentation de la course d'extension des bras de support est toutefois limitée par le fait que les deux bras de support doivent rester en permanence en appui l'un sur l'autre, pour respecter des contraintes d'intégrité structurelle de la nacelle et de répartition des efforts exercés sur l'essieu. Ceci n'est pas satisfaisant, notamment du point de vue de la limitation de la stabilité de la nacelle consécutive à la limitation de la course d'extension des bras de support.

Le but de l'invention est de proposer un essieu présentant une course d'extension améliorée, afin d'augmenter la stabilité de la nacelle, tout en procurant à la nacelle un encombrement réduit.

A cet effet, l'invention a pour objet un essieu monté sur un châssis de véhicule, l'essieu comportant un caisson central, un premier bras de support relié à une première roue du véhicule et monté coulissant à l'intérieur du caisson central, et un deuxième bras de support relié à une deuxième roue du véhicule, le deuxième bras de support étant mobile en translation longitudinale à l'intérieur du premier bras de support, caractérisé en ce que l'essieu comporte également un caisson guide fixé au caisson central, le caisson guide comprenant un tube rectangulaire et définissant un volume annulaire extérieur compris entre le caisson central et le tube, et un volume intérieur compris à l'intérieur du tube, le premier bras de support étant reçu à l'intérieur du volume annulaire extérieur et étant propre à être guidé par le caisson guide selon un premier chemin de translation longitudinale, le deuxième bras de support étant reçu à l'intérieur du volume intérieur et étant propre à être guidé par le caisson guide selon un deuxième chemin de translation longitudinale.

Suivant d'autres aspects avantageux de l'invention, l'essieu comprend une ou plusieurs des caractéristiques suivantes, prises isolément ou suivant toutes les combinaisons techniquement possibles :
- l'essieu comprend au moins un actionneur, de préférence un vérin, formant un moyen de translation de l'un au moins des premier et deuxième bras de support, et le ou chaque actionneur s'étend selon l'axe de translation longitudinale ;
- l'essieu comprend un premier vérin et un deuxième vérin, formant respectivement un moyen de translation du premier bras de support et un moyen de translation du deuxième bras de support, les premier et deuxième vérins étant respectivement fixés au premier et au deuxième bras de support chacun en au moins un premier point de fixation respectif ;
- les premier et deuxième vérins s'étendent à l'intérieur du volume intérieur du caisson guide et au moins un vérin est fixé au tube rectangulaire en au moins un deuxième point de fixation ;
- les premier et deuxième vérins s'étendent à l'extérieur du caisson central et au moins un vérin est fixé au caisson central en au moins un deuxième point de fixation ;
- le caisson guide présente une longueur strictement inférieure à la longueur du caisson central ;
- le deuxième bras de support comprend sur une de ses parois externes au moins un élément de support de pression ou d'efforts exercés sur l'essieu, le ou chaque élément de support étant propre à être au contact d'une paroi interne du caisson guide ;
- le tube rectangulaire ou le premier bras de support comprend sur une de ses parois externes au moins un élément de support de pression ou d'efforts exercés sur l'essieu, le ou chaque élément de support étant propre à être au contact d'une paroi interne du premier bras de support, ou d'une paroi interne du caisson central ;
- le caisson central, le caisson guide, le premier bras de support et le deuxième bras de support présentent chacun une section transversale sensiblement rectangulaire.

L'invention a également pour objet un véhicule, notamment de type nacelle élévatrice, équipé d'un châssis, caractérisé en ce qu'il est également équipé d'au moins un essieu tel que mentionné ci-dessus, le ou chaque essieu étant monté sur le châssis du véhicule.

Avantageusement, le véhicule comprend au moins deux essieux, ces essieux étant montés sur le châssis du véhicule et étant mécaniquement indépendants.

Avantageusement, les deux bras de support d'un même essieu selon l'invention sont déplaçables hors du caisson central de manière synchronisée, ce qui permet à un opérateur de pouvoir manoeuvrer et reconfigurer le véhicule dans des espaces relativement étroits.

Grâce aux essieux selon l'invention, le véhicule est ainsi facilement reconfigurable, tout en présentant une stabilité élevée et un encombrement réduit. Avantageusement, la portée du bras télescopique du véhicule est en outre améliorée.

Les caractéristiques et avantages de l'invention apparaîtront à la lecture de la description qui va suivre, donnée uniquement à titre d'exemple non limitatif, et faite en référence aux dessins annexés, sur lesquels :
- la figure 1 est une vue en perspective d'une nacelle élévatrice conforme à l'invention, équipée de deux essieux également conformes à l'invention ;
- la figure 2 est une vue en perspective éclatée d'un essieu de la nacelle de la figure 1 selon un premier mode de réalisation ;
- la figure 3 est une vue selon le plan III-III de la figure 2, montrant l'essieu tel qu'assemblé ;
- la figure 4 est une vue en perspective de l'essieu des figures 2 et 3, dans une configuration compacte de la nacelle ;
- la figure 5 est une vue de dessus de la nacelle de la figure 1, montrant la nacelle en configuration compacte, la tourelle et le bras étant omis pour la clarté du dessin ;
- les figures 6 et 7 sont des vues analogues respectivement aux figures 4 et 5, dans une configuration étendue de la nacelle ;
- la figure 8 est une vue analogue à la figure 2 pour un essieu selon un deuxième mode de réalisation.

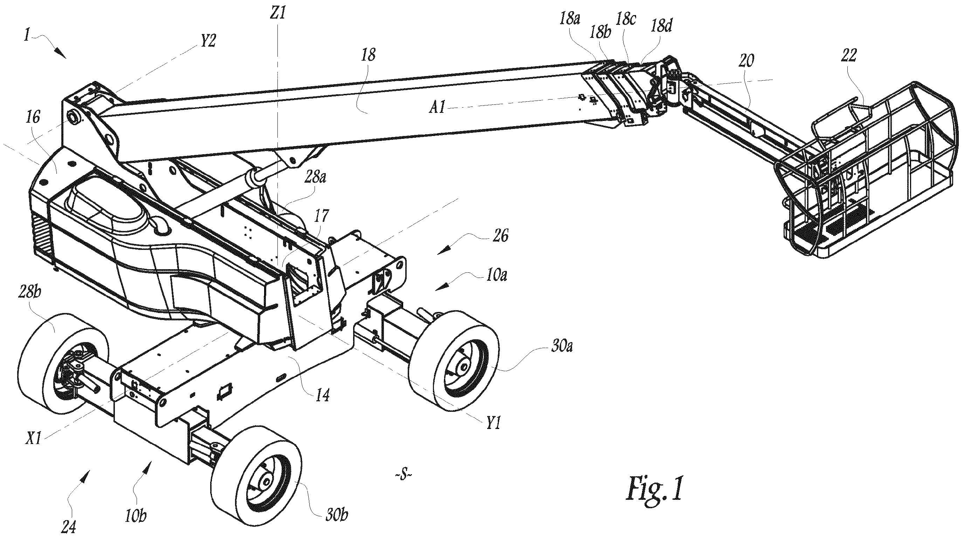

Sur les figures 1 à 8 est représenté un véhicule 1 de type nacelle élévatrice de personnel conforme à l'invention.

La nacelle 1 est équipée de deux essieux 10a, 10b, également conformes à l'invention, montés sur un châssis motorisé 14. Le châssis 14 présente une forme globalement parallélépipédique. Les moyens de motorisation du châssis 14, non représentés, peuvent comprendre un moteur à combustion interne ou un moteur électrique. Sur le châssis 14 peuvent également être montés une unité centrale de gestion électronique, un réservoir hydraulique, un réservoir de carburant, et/ou un ensemble de batteries électriques.

Dans la suite de la description, les termes « horizontal », « vertical », « haut » et « bas » sont définis par rapport à une surface au sol S. On note X1 l'axe longitudinal central du châssis 14 et Y1 l'axe transversal central du châssis 14, perpendiculaire à l'axe X1.

Comme illustré sur la figure 1, sur le châssis 14 est agencée une tourelle 16, apte à tourner sur 360 degrés autour d'un axe de rotation vertical Z1. De préférence, la tourelle 16 est actionnée par des moyens hydrauliques, non représentés. Un bras télescopique 18 est articulé sur la tourelle 16 autour d'un axe Y2 perpendiculaire à l'axe Z1. En position de repos, le bras 18 peut venir se loger dans un logement longitudinal 17 ménagé dans la tourelle 16. Le bras 18 comprend plusieurs caissons allongés 18a, 18b, 18c et 18d, emboîtés les uns dans les autres selon une direction longitudinale d'axe A1 perpendiculaire à l'axe Y2. Le fonctionnement du bras télescopique 18 est connu en soi. En variante, le bras 18 peut être un bras d'élévation, articulé ou de tout type connu, ou un mât vertical.

A l'extrémité 18d du bras 18 est agencée une structure 20 de support d'une plate-forme 22. La plate-forme 22 est prévue pour recevoir une charge, notamment du personnel et de l'équipement. La valeur de la charge admissible dépend des dimensions et de la résistance mécanique des différents éléments de la nacelle 1. En déplacement sur le sol S, lorsque la tourelle 16 est orientée à 0 degrés, l'opérateur de la nacelle 1, non représenté, est positionné sur la plate-forme 22 et regarde en direction d'un côté avant 24 opposé à un côté arrière 26 de la nacelle 1.

Comme montré à la figure 1, la nacelle 1 comprend un essieu arrière 10a et un essieu avant 10b. La nacelle 1 est en outre munie d'une roue arrière gauche 28a, d'une roue avant gauche 28b, d'une roue arrière droite 30a et d'une roue avant droite 30b. L'essieu arrière 10a, respectivement l'essieu avant 10b, est relié aux roues arrière 28a, 30a, respectivement aux roues avant 28b, 30b. Chaque essieu 10a, 10b est avantageusement articulé sur le châssis 14.

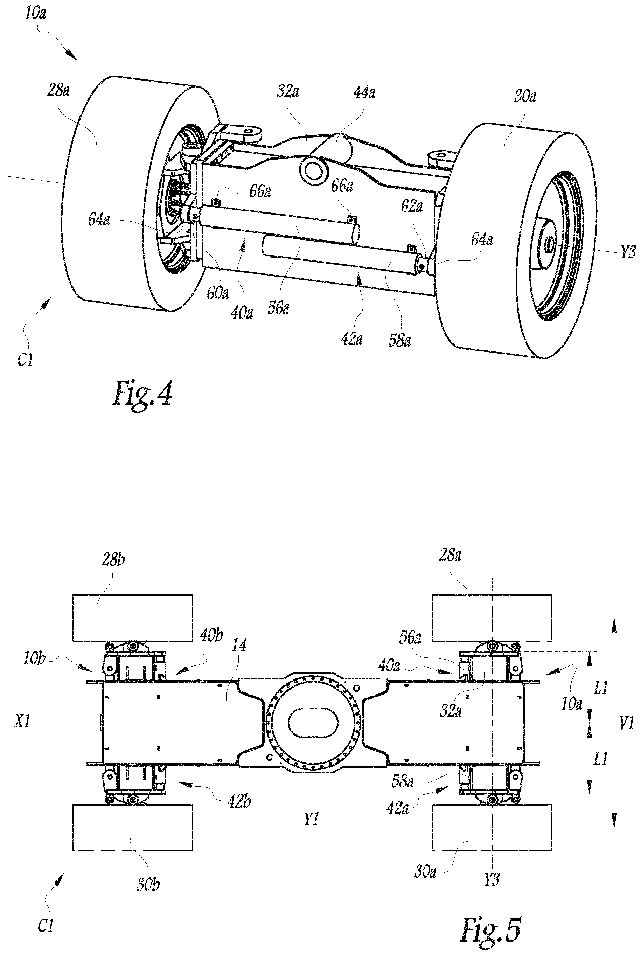

Les figures 4 à 7 montrent l'essieu 10a dans deux configurations C1 et C2 de la nacelle 1, qui seront détaillées ci-après.

Par la suite, dans un but de simplification, la description est faite principalement en référence à l'essieu arrière 10a, étant entendu que les explications sont valables également pour l'essieu avant 10b.

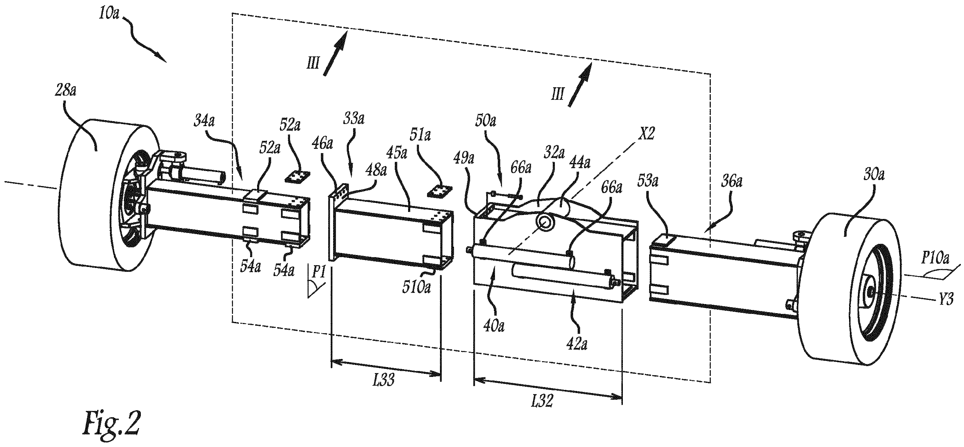

Comme illustré sur la figure 2, l'essieu arrière 10a s'étend entre les roues arrière 28a, 30a selon un axe Y3. L'axe Y3 est l'axe de rotation des roues 28a, 30a lorsque la nacelle 1 avance en ligne droite. L'essieu arrière 10a comporte un caisson central 32a, un caisson guide 33a, un bras de support gauche 34a, un bras de support droit 36a, un actionneur gauche 40a et un actionneur droit 42a. Le caisson central 32a, le caisson guide 33a et les bras de support 34a, 36a sont, par exemple, formés par une structure métallique mécano-soudée.

De façon connue, le caisson central 32a est fixé au châssis 14 via un mécanisme 44a, conformé comme une liaison pivot d'axe longitudinal X2. Autrement dit, le caisson central 32a est partiellement mobile en rotation par rapport au châssis 14 autour de l'axe longitudinal X2, sur quelques dizaines de degrés, par exemple sur 10 degrés. Ce débattement de quelques dizaines de degrés de l'essieu arrière 10a permet aux roues arrière 28a, 30a de pouvoir suivre différents dénivelés de terrain. En variante, le caisson central 32a est fixé au châssis 14 via une liaison rigide.

On définit un plan de référence P10a associé à l'essieu arrière 10a, ce plan P10a étant sensiblement parallèle au sol S lorsque la nacelle 1 repose sur le sol S. Plus précisément, le plan P10a est défini comme le plan tangent aux surfaces planes supérieures du caisson central 32a. L'axe Y3 est parallèle au plan P10a et perpendiculaire à l'axe longitudinal X2. Par conséquent, l'axe Y3 est un axe sensiblement horizontal. Dans un but de simplification, on considère par la suite que l'axe Y3 est un axe horizontal.

Le caisson guide 33a est fixé au caisson central 32a et s'étend selon l'axe horizontal Y3, parallèlement au plan P10a. Le caisson guide 33a présente avantageusement une section transversale sensiblement rectangulaire et une longueur, mesurée parallèlement à l'axe Y3, inférieure ou égale à la longueur du caisson central 32a. De préférence, comme illustré dans l'exemple de réalisation des figures 2 à 7, le caisson guide 33a présente une longueur L33 strictement inférieure à la longueur L32 du caisson central 32a.

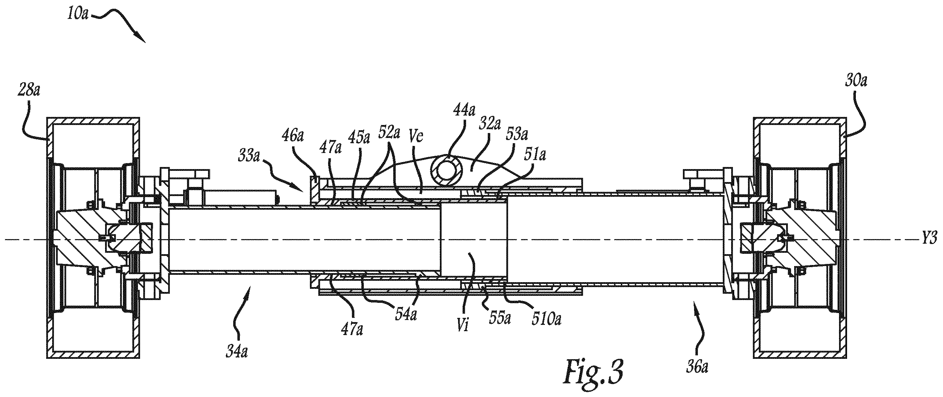

Le caisson guide 33a comporte un tube rectangulaire 45a insérée dans le caisson central 32a, ainsi qu'une collerette 46a fixée au tube 45a. Le caisson guide 33a comporte également deux patins internes 47a, fixés sur l'extrémité des parois internes respectivement haute et basse du tube 45a, du côté de la collerette 46a, comme illustré sur la figure 3. La collerette 46a s'étend sur l'extrémité gauche du tube 45a et présente un contour extérieur par exemple sensiblement rectangulaire. La collerette 46a s'étend sensiblement sur tout le pourtour du tube 45a, dans un plan vertical P1 perpendiculaire au plan P10a. La collerette 46a définit une surface d'appui droite 48a propre à coopérer avec la paroi latérale gauche 49a du caisson central 32a, pour le blocage du caisson guide 33a en translation longitudinale, de la gauche vers la droite suivant l'axe Y3. Le caisson central 32a est fixé à la collerette 46a par des moyens de fixation adaptés tels que, par exemple, un système 50a de fixation par vis et boulons.

Le tube rectangulaire 45a comporte, sur l'extrémité droite de sa paroi externe haute, respectivement basse, au moins un premier élément 51a, respectivement au moins un deuxième élément 510a, de support de pression ou d'efforts exercés sur l'essieu arrière 10a. Dans l'exemple de réalisation des figures 2 à 7, le tube 45a comporte un premier élément de support 51a et un deuxième élément de support 510a.

Comme illustré sur la figure 3, le caisson guide 33a définit un volume annulaire extérieur Ve compris entre le caisson central 32a et le tube 45a, et un volume intérieur Vi compris à l'intérieur du tube 45a. Le caisson guide 33a définit ainsi un chemin extérieur de translation longitudinale compris dans le volume annulaire extérieur Ve, et un chemin intérieur de translation longitudinale compris dans le volume intérieur Vi.

Le bras de support gauche 34a, respectivement droit 36a, s'étend selon l'axe horizontal Y3 et est relié à la roue arrière gauche 28a, respectivement droite 30a. Le bras de support gauche 34a est mobile en translation à l'intérieur du bras de support droit 36a et du caisson central 32a, suivant l'axe horizontal Y3. Le bras de support droit 36a est monté coulissant à l'intérieur du caisson central 32a, suivant l'axe horizontal Y3. Plus précisément, le bras de support gauche 34a est reçu à l'intérieur du volume intérieur Vi et est monté coulissant à l'intérieur du caisson guide 33a, selon l'axe Y3. Le bras de support droit 36a est reçu à l'intérieur du volume annulaire extérieur Ve et est monté coulissant entre le tube rectangulaire 45a et le caisson central 32a, suivant l'axe horizontal Y3. Le bras de support gauche 34a est ainsi propre à être guidé par le caisson guide 33 selon le chemin intérieur de translation longitudinale, suivant l'axe Y3. Le bras de support droit 36a est propre à être guidé par le caisson guide 33 selon le chemin extérieur de translation longitudinale, suivant l'axe Y3.

Le bras de support gauche 34a comporte sur l'extrémité droite de sa paroi externe haute au moins un troisième élément de support 52a, propre à être au contact de la paroi interne haute du caisson guide 33a. Le bras de support droit 36a comporte sur l'extrémité gauche de sa paroi externe haute au moins un quatrième élément de support 53a, propre à être au contact de la paroi interne haute du caisson central 32a.

En outre, le bras de support gauche 34a comporte sur l'extrémité droite de sa paroi externe basse au moins un cinquième élément de support 54a, propre à être au contact de la paroi interne basse du caisson guide 33a. Le bras de support droit 36a comporte sur l'extrémité gauche de sa paroi externe basse au moins un sixième élément de support 55a, propre à être au contact de la paroi interne basse du caisson central 32a.

Dans l'exemple de réalisation des figures 2 à 7, le bras de support gauche 34a comporte deux troisièmes éléments de support 52a espacés horizontalement suivant l'axe horizontal Y3. Le bras de support gauche 34a comporte également deux cinquièmes éléments de support 54a espacés horizontalement suivant l'axe horizontal Y3. Le bras de support droit 36a comporte un quatrième élément de support 53a et un sixième élément de support 55a. La présence de deux troisièmes éléments de support 52a sur le bras de support gauche 34a permet d'assurer en permanence la présence d'au moins un élément de support 52a à l'intérieur du volume intérieur Vi du caisson guide 33a.

Avantageusement, chaque élément de support 51a, 510a, 52a, 53a, 54a, 55a est un patin de forme sensiblement rectangulaire. Avantageusement, chaque premier, troisième et quatrième élément de support 51a, 52a, 53a est formé dans un matériau plastique, par exemple en polyamide. Les troisième et cinquième éléments de support 52a, 54a sont propres en outre à faciliter le coulissement du bras de support gauche 34a à l'intérieur du caisson guide 33a. Les quatrième et sixième éléments de support 53a, 55a sont propres en outre à faciliter le coulissement du bras de support droit 36a à l'intérieur du caisson central 32a. Par ailleurs, le premier élément de support 51a, respectivement le deuxième élément de support 510a, est propre à être au contact de la paroi interne haute, respectivement de la paroi interne basse du bras de support droit 36a.

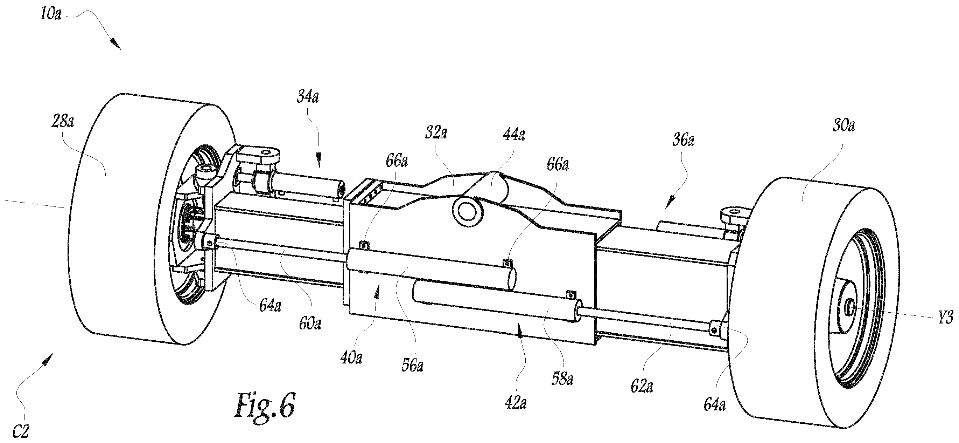

Chaque actionneur 40a, 42a s'étend à l'extérieur du caisson central 32a. Ce mode de réalisation privilégié des actionneurs 40a, 42a permet de faciliter leur maintenance, ainsi que le guidage des différents câbles et flexibles d'alimentation des actionneurs. Ces câbles et ces flexibles d'alimentation ne sont pas représentés dans un but de simplification. Au moins un actionneur 40a, 42a est fixé sur une paroi latérale externe du caisson central 32a en au moins un point de fixation 66a. L'actionneur gauche 40a, respectivement droit 42a, est conformé comme un vérin s'étendant selon l'axe horizontal Y3 et comprenant un corps de vérin gauche 56a, respectivement un corps de vérin droit 58a, et une tige de vérin gauche 60a, respectivement une tige de vérin droite 62a. La tige de vérin gauche 60a, respectivement la tige de vérin droite 62a, est solidaire du bras de support gauche 34a, respectivement du bras de support droit 36a, en au moins un point de fixation 64a. Dans l'exemple de réalisation des figures 2 à 7, chaque corps de vérin 56a, 58a est fixé sur une paroi externe du caisson central 32a en deux points de fixation 66a. La tige de vérin gauche 60a, respectivement la tige de vérin droite 62a, est fixée sur une paroi externe du bras de support gauche 34a, respectivement du bras de support droit 36a, en un seul point de fixation 64a, comme illustré sur les figures 4 et 6.

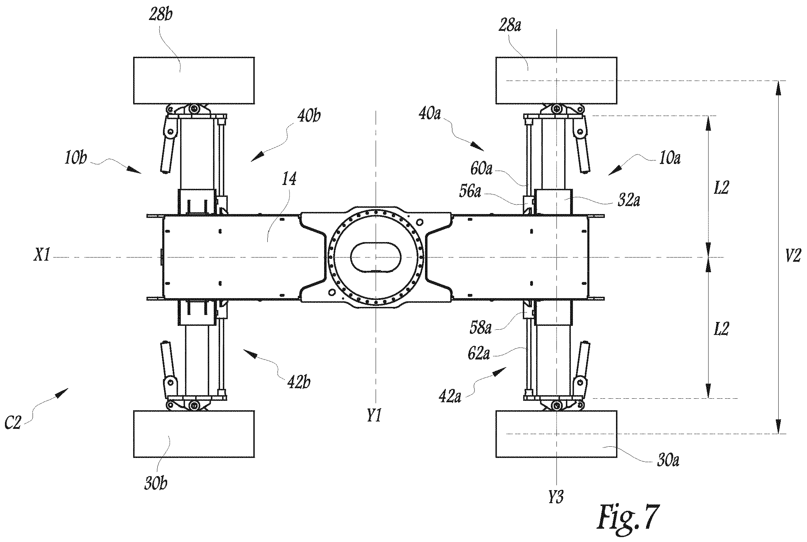

Avantageusement, chaque actionneur 40a, 42a est un vérin, notamment un vérin hydraulique, électrique ou pneumatique. Autrement dit, l'actionneur gauche 40a, respectivement droit 42a, constitue un moyen de translation longitudinale du bras de support gauche 34a, respectivement du bras de support droit 36a, par rapport au caisson central 32a et au caisson guide 33a. Comme montré aux figures 5 et 7, l'actionneur gauche 40a, respectivement droit 42a est extensible entre une longueur L1 et une longueur L2, mesurée parallèlement à l'axe Y3 entre un plan vertical comprenant l'axe longitudinal X1 et un plan vertical tangent à l'extrémité gauche du bras de support gauche 34a, respectivement à l'extrémité droite du bras de support droit 36a.

Chaque actionneur 40a, respectivement 42a peut également être couplé à un capteur de position linéaire de la tige 60a, respectivement 62a par rapport au corps 56a, respectivement 58a, et/ou un contacteur de fin de course en translation. Ces éléments associés aux actionneurs 40a, 42a ne sont pas représentés dans un but de simplification.

De manière classique, un essieu peut être porteur, directeur et/ou moteur.

En l'espèce, l'essieu arrière 10a est configuré pour porter les éléments constitutifs 14 à 22 de la nacelle 1. Dans le cas où l'essieu arrière 10a intègre des moyens de transmission d'un mouvement de rotation aux roues arrière 28a, 30a autour de leur axe de rotation Y3, l'essieu est également moteur. Ces moyens de transmission peuvent recevoir un couple d'entraînement provenant des moyens de motorisation du châssis 14.

Les éléments constitutifs de l'essieu avant 10b sont similaires aux éléments constitutifs de l'essieu arrière 10a, et portent les mêmes références numériques en remplaçant la référence « a » par la référence « b ».

L'espacement entre les roues arrière 28a et 30a d'une part et les roues avant 28b et 30b d'autre part, considéré dans le sens de la longueur de la nacelle 1, est appelé « empattement ». L'espacement entre les roues arrière 28a et 30a, ou entre les roues avant 28b et 30b, considéré dans le sens de la largeur de la nacelle 1, est appelé « voie ». La largeur de la nacelle 1 étant inférieure à sa longueur, la voie est par conséquent inférieure à l'empattement. Dans les deux configurations C1 et C2 de la nacelle 1 décrites par la suite, l'empattement de la nacelle est constant.

Les figures 4 et 5 montrent la nacelle 1 dans une configuration compacte C1, procurant un encombrement minimal. La nacelle 1 présente alors une voie V1 minimale et les actionneurs 40a, 40b, 42a, 42b sont rétractés. La voie V1 est par exemple sensiblement égale à 2,5 m. Dans sa configuration compacte C1, la nacelle 1 peut se faufiler dans un passage étroit, ou bien pénétrer dans ou sortir d'un conteneur ou d'une remorque lors de son chargement ou son déchargement.

Les figures 6 et 7 montrent la nacelle 1 dans une configuration étendue C2, procurant une stabilité maximale. La nacelle 1 présente alors une voie V2 maximale et les actionneurs 40a, 40b, 42a, 42b sont étendus vers l'extérieur, à l'opposé de l'axe Z1. La voie V2 est par exemple comprise entre 3,5 m et 4 m, par exemple sensiblement égale à 3,8 m. Dans sa configuration étendue C2, la nacelle 1 présente une stabilité maximale. Lors d'une rotation à 360 degrés de la tourelle 16, la stabilité de la nacelle 1 varie en fonction de la position de cette tourelle 16 et des autres éléments mobiles: bras d'élévation 18, structure 20, plate-forme 22 et ses occupants. Dans la configuration étendue C2, la stabilité de la nacelle 1 varie peu en fonctionnement, quelle que soit la position en rotation de la tourelle 16 et des autres éléments mobiles 18, 20 et 22. Dans cette configuration C2, la nacelle 1 peut se déplacer en roulant sur les roues 28a, 28b, 30a, 30b, même si le porte-à-faux entre le châssis 14 et les roues est important.

Le déploiement horizontal des essieux 10a, 10b va maintenant être décrit. La nacelle 1 peut mettre en oeuvre son déploiement en fonction des contraintes d'utilisation et de l'appréciation de l'opérateur. Avant de choisir de mettre en oeuvre le déploiement de la nacelle 1, l'opérateur repère visuellement les limites de déploiement de la nacelle 1, notamment les obstacles au sol S. L'opérateur peut également être assisté dans sa prise de décision par l'unité centrale, laquelle peut être configurée pour interpréter des informations reçues de capteurs de proximité répartis sur le pourtour de la nacelle 1.

Le déploiement peut être activé lors d'un déplacement de la nacelle 1, au dessus d'une certaine vitesse et lorsque l'espace est suffisant. Dans ce cas, la nacelle 1 se déplace vers l'avant ou vers l'arrière, ou bien alternativement d'avant en arrière, tandis que chaque essieu est progressivement déplacé de la position rétractée à la position étendue, ou réciproquement.

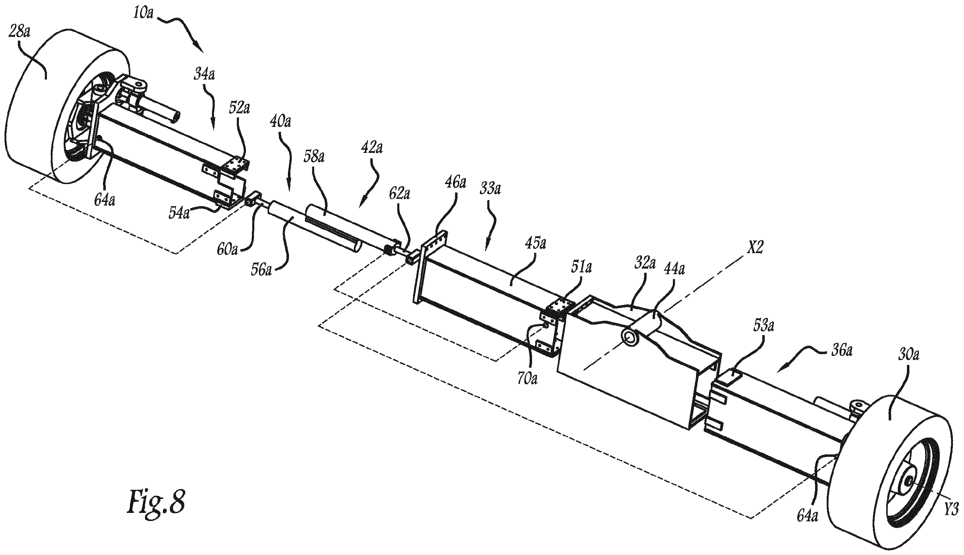

La figure 8 illustre un deuxième mode de réalisation, pour lequel les éléments analogues au premier mode de réalisation décrit précédemment sont repérés par des références identiques.

Selon ce deuxième mode de réalisation décrit en référence à un essieu arrière 10a, chaque actionneur 40a, 42a s'étend à l'intérieur du volume intérieur Vi du caisson guide 33a. Au moins un actionneur 40a, 42a est fixé via son corps de vérin 56a, 58a sur une paroi interne du tube 45a, en au moins un point de fixation 70a. Dans l'exemple de réalisation de la figure 8, les corps de vérin 56a, 58a des actionneurs 40a, 42a sont solidaires et le corps de vérin droit 58a est fixé sur l'extrémité droite d'une paroi latérale interne du tube 45a, en un seul point de fixation 70a. A la différence du premier mode de réalisation, la tige de vérin gauche 60a, respectivement la tige de vérin droite 62a, est en outre fixée sur une paroi interne du bras de support gauche 34a, respectivement du bras de support droit 36a, en un seul point de fixation 64a.

En outre, le bras de support gauche 34a ne comporte, selon ce deuxième mode de réalisation, qu'un seul deuxième élément de support 52a.

En variante non représentée, les corps de vérin 56a, 58 ne sont pas solidaires et chaque corps de vérin 56a, 58 est fixé sur une paroi interne du tube 45a, en au moins un point de fixation 70a.

Bien que la description de ce deuxième mode de réalisation de l'invention ait été faite en référence à l'essieu arrière 10a, elle s'applique de la même manière à l'essieu avant 10b, en remplaçant dans les références numériques la référence « a » par la référence « b ».

Le fonctionnement de l'essieu selon ce deuxième mode de réalisation est analogue à celui du premier mode de réalisation décrit précédemment, et n'est donc pas décrit à nouveau.

Par comparaison avec l'essieu selon le premier mode de réalisation, l'essieu selon le deuxième mode de réalisation permet de protéger les actionneurs 40a, 42a contre des chocs éventuels.

Grâce à la présence d'un caisson guide agissant comme un appui mécanique intermédiaire pour les bras de support, les essieux 10a, 10b selon l'invention permettent ainsi d'augmenter la voie de la nacelle 1. Par suite, la stabilité de la nacelle 1 et la portée maximale admissible de la plate-forme 22 sont également augmentées.

De préférence, l'unité centrale de gestion électronique montée sur le châssis 14 permet de calculer la portée maximale admissible de la plate-forme 22 en fonction de différents paramètres tels que: la rotation de la tourelle 16, l'extension du bras télescopique 18, la charge de la plate-forme 22, la voie V entre roues et/ou l'inclinaison du terrain. Tout paramètre adapté peut sélectivement être ou ne pas être pris en compte. De manière simplifiée, le calcul de portée maximale admissible peut ne pas dépendre de la rotation de la tourelle 16, mais intégrer le cas le plus défavorable : lorsque la tourelle 16 et le bras 18 sont orientés à 90 degrés de l'axe X1 du châssis 14, comme représenté sur la figure 1.

Par ailleurs, du fait de leur actionnement par des actionneurs indépendants 40a, 42a, respectivement 40b, 42b, les bras de support gauche et droit 34a, 36a, respectivement 34b, 36b, peuvent être étendus ou rétractés de manière synchronisée ou non. Ceci permet à l'opérateur de pouvoir manoeuvrer et reconfigurer le véhicule dans des espaces relativement étroits.

En outre, les essieux 10a, 10b étant mécaniquement indépendants, les actionneurs 40a et 42a d'une part, et 40b et 42b d'autre part, peuvent être commandés, de manière indépendante ou synchronisée, par l'unité centrale de gestion électronique montée sur le châssis 14 et pilotée par l'opérateur de la nacelle 1. En commandant, via l'unité centrale de gestion, les actionneurs de manière indépendante, l'opérateur peut au besoin augmenter de manière indépendante la stabilité de la partie avant ou arrière de la nacelle 1.

De préférence, les essieux 10a, 10b présentent la même construction, de sorte que la nacelle 1 est plus simple et moins coûteuse à fabriquer. De plus, les éléments de symétrie entre les essieux 10a, 10b facilite la gestion des différents déplacements par l'unité centrale.

De préférence également, l'essieu arrière 10a, respectivement avant 10b, intègre des moyens de transmission d'un mouvement de rotation aux roues arrière 28a, 30a, respectivement aux roues avant 28b, 30b. Ces moyens de transmission, non représentés dans un but de simplification, sont configurés pour recevoir un couple d'entraînement provenant des moyens de motorisation du châssis 14. Dans ce cas, chaque essieu 10a, 10b est moteur.

Selon une variante particulière non représentée, la nacelle peut comprendre une combinaison d'essieux 10a, 10b porteurs et/ou moteurs et/ou directeurs. Par exemple, l'essieu arrière 10a peut être porteur et moteur tandis que l'essieu avant 10b peut être porteur et directeur, ou inversement.

Selon une autre variante particulière non représentée, la nacelle comporte plus de deux essieux, qui peuvent être identiques ou de types différents. Par exemple, une nacelle équipée de trois essieux peut comprendre un essieu directeur, un essieu moteur, et un essieu porteur. Selon un autre exemple, chacun des essieux est porteur, directeur et moteur.

Selon un autre mode de réalisation, non représenté, les actionneurs gauche et droite sont remplacés par un seul actionneur télescopique dans au moins un essieu de la nacelle. L'actionneur télescopique est par exemple formé d'un vérin télescopique solidaire en chacune de ses extrémités des bras de support gauche et droit. Cet actionneur télescopique s'étend par exemple à l'intérieur du volume intérieur Vi du caisson guide, selon l'axe horizontal Y3, En variante, l'actionneur télescopique s'étend à l'extérieur du caisson central, selon l'axe horizontal Y3. Cet actionneur télescopique constitue un moyen de translation longitudinale des bras de support gauche et droit par rapport au caisson central.

Bien que la description ait été faite en référence à deux configurations particulières de la nacelle 1, correspondant à un encombrement minimal et à une stabilité maximale de celle-ci, l'homme du métier comprendra que d'autres configurations intermédiaires de la nacelle sont possibles. En particulier, une configuration intermédiaire intéressante est obtenue lorsqu'un des deux essieux est étendu et l'autre essieu est rétracté.

L'invention a été représentée dans le cas de son utilisation sur un véhicule de type nacelle élévatrice. L'invention est applicable à tous les engins de travaux publics, de manutention ou de levage, tels que les pelleteuses, les chariots élévateurs, les préparateurs de commande ou les grues.

## Revendications

1. Essieu (10a, 10b) monté sur un châssis (14) de véhicule (1), l'essieu (10a, 10b) comportant un caisson central (32a), un premier bras de support (36a) relié à une première roue (30a) du véhicule et monté coulissant à l'intérieur du caisson central (32a), et un deuxième bras de support (34a) relié à une deuxième roue (28a) du véhicule (1), le deuxième bras de support (34a) étant mobile en translation longitudinale à l'intérieur du premier bras de support (36a), **caractérisé en ce que** l'essieu (10a, 10b) comporte également un caisson guide (33a) fixé au caisson central (32a), le caisson guide (33a) comprenant un tube rectangulaire (45a) et définissant un volume annulaire extérieur (Ve) compris entre le caisson central (32a) et le tube (45a), et un volume intérieur (Vi) compris à l'intérieur du tube (45a), le premier bras de support (36a) étant reçu à l'intérieur du volume annulaire extérieur (Ve) et étant propre à être guidé par le caisson guide (33a) selon un premier chemin de translation longitudinale, le deuxième bras de support (34a) étant reçu à l'intérieur du volume intérieur (Vi) et étant propre à être guidé par le caisson guide (33a) selon un deuxième chemin de translation longitudinale.

2. Essieu (10a, 10b) selon la revendication 1, **caractérisé en ce qu'**il comprend au moins un actionneur (40a, 42a), de préférence un vérin, formant un moyen de translation de l'un au moins des premier (36a) et deuxième (34a) bras de support, et **en ce que** le ou chaque actionneur (40a, 42a) s'étend selon l'axe de translation longitudinale.

3. Essieu (10a, 10b) selon la revendication 2, **caractérisé en ce qu'**il comprend un premier vérin (42a) et un deuxième vérin (40a), formant respectivement un moyen de translation du premier bras de support (36a) et un moyen de translation du deuxième bras de support (34a), les premier (42a) et deuxième (40a) vérins étant respectivement fixés au premier (36a) et au deuxième (34a) bras de support chacun en au moins un premier point de fixation (64a) respectif.

4. Essieu (10a, 10b) selon la revendication 3, **caractérisé en ce que** les premier (42a) et deuxième (40a) vérins s'étendent à l'intérieur du volume intérieur (Vi) du caisson guide (33a) et **en ce qu'**au moins un vérin (40a, 42a) est fixé au tube rectangulaire (45a) en au moins un deuxième point de fixation (70a).

5. Essieu (10a, 10b) selon la revendication 3, **caractérisé en ce que** les premier (42a) et deuxième (40a) vérins s'étendent à l'extérieur du caisson central (32a) et **en ce qu'**au moins un vérin (40a, 42a) est fixé au caisson central (32a) en au moins un deuxième point de fixation (66a).

6. Essieu (10a, 10b) selon l'une quelconque des revendications précédentes, **caractérisé en ce que** le caisson guide (33a) présente une longueur (L33) strictement inférieure à la longueur (L32) du caisson central (32a).

7. Essieu (10a, 10b) selon l'une quelconque des revendications précédentes, **caractérisé en ce que** le deuxième bras de support (34a) comprend sur une de ses parois externes au moins un élément (52a, 54a) de support de pression ou d'efforts exercés sur l'essieu (10a, 10b), le ou chaque élément de support (52a, 54a) étant propre à être au contact d'une paroi interne du caisson guide (33a).

8. Essieu (10a, 10b) selon l'une quelconque des revendications précédentes, **caractérisé en ce que** le tube rectangulaire (45a) ou le premier bras de support (36a) comprend sur une de ses parois externes au moins un élément (51a, 510a, 53a, 55a) de support de pression ou d'efforts exercés sur l'essieu (10a, 10b), le ou chaque élément de support (51a, 510a, 53a, 55a) étant propre à être au contact d'une paroi interne du premier bras de support (36a), ou d'une paroi interne du caisson central (32a).

9. Essieu (10a, 10b) selon l'une quelconque des revendications précédentes, **caractérisé en ce que** le caisson central (32a), le caisson guide (33a), le premier bras de support (36a) et le deuxième bras de support (34a) présentent chacun une section transversale sensiblement rectangulaire.

10. Véhicule (1), notamment de type nacelle élévatrice, équipé d'un châssis (14), **caractérisé en ce qu'**il est également équipé d'au moins un essieu (10a, 10b) selon l'une quelconque des revendications précédentes, le ou chaque essieu (10a, 10b) étant monté sur le châssis (14) du véhicule (1).

## Patentansprüche

1. Achse (10a, 10b), die an einem Fahrgestell (14) eines Fahrzeugs (1) montiert ist, wobei die Achse (10a, 10b) einen zentralen Kasten (32a), einen ersten Tragarm (36a), der mit einem ersten Rad (30a) des Fahrzeugs verbunden und gleitbeweglich im Inneren des zentralen Kastens (32a) montiert ist, und einen zweiten Tragarm (34a) hat, der mit einem zweiten Rad (28a) des Fahrzeugs (1) verbunden ist, wobei der zweite Tragarm (34a) im Inneren des ersten Tragarms (36a) längstranslationsbeweglich ist, **dadurch gekennzeichnet, dass** die Achse (10a, 10b) auch einen Führungskasten (33a) hat, der am zentralen Kasten (32a) befestigt ist, wobei der Führungskasten (33a) ein rechteckiges Rohr (45a) hat und ein äußeres, ringförmiges Volumen (Ve), das zwischen dem zentralen Kasten (32a) und dem Rohr (45a) liegt, und ein inneres Volumen (Vi) definiert, das im Inneren des Rohrs (45a) liegt, wobei der erste Tragarm (36a) im Inneren des äußeren, ringförmigen Volumens (Ve) aufgenommen und dazu geeignet ist, durch den Führungskasten (33a) entlang eines ersten Längstranslationswegs geführt zu werden, wobei der zweite Tragarm (34a) im Inneren des inneren Volumens (Vi) aufgenommen und dazu geeignet ist, durch den Führungskasten (33a) entlang eines zweiten Längstranslationswegs geführt zu werden.

2. Achse (10a, 10b) nach Anspruch 1, **dadurch gekennzeichnet, dass** sie mindestens ein Stellglied (40a, 42a) hat, vorzugsweise einen Zylinder, das bzw. der ein Translationsmittel für den ersten (36a) und/oder zweiten (34a) Tragarm bildet, und dass sich das oder jedes Stellglied (40a, 42a) entlang der Längstranslationsachse erstreckt.

3. Achse (10a, 10b) nach Anspruch 2, **dadurch gekennzeichnet, dass** sie einen ersten Zylinder (42a) und einen zweiten Zylinder (40a) hat, die ein Translationsmittel für den ersten Tragarm (36a) bzw. ein Translationsmittel für den zweiten Tragarm (34a) bilden, wobei der erste (42a) und zweite (40a) Zylinder am ersten (36a) bzw. zweiten (40a) Tragarm jeweils an mindestens einem jeweiligen ersten Befestigungspunkt (64a) befestigt sind.

4. Achse (10a, 10b) nach Anspruch 3, **dadurch gekennzeichnet, dass** sich der erste (42a) und zweite (40a) Zylinder im Inneren des inneren Volumens (Vi) des Führungskastens (33a) erstrecken, und dass mindestens ein Zylinder (40a, 42a) an mindestens einem zweiten Befestigungspunkt (70a) am rechteckigen Rohr (45a) befestigt ist.

5. Achse (10a, 10b) nach Anspruch 3, **dadurch gekennzeichnet, dass** sich der erste (42a) und zweite (40a) Zylinder außerhalb des zentralen Kastens (32a) erstrecken, und dass mindestens ein Zylinder (40a, 42a) an mindestens einem zweiten Befestigungspunkt (66a) am zentralen Kasten (66a) befestigt ist.

6. Achse (10a, 10b) nach einem der vorhergehenden Ansprüche, **dadurch gekennzeichnet, dass** der Führungskasten (44a) eine Länge (L33) aufweist, die strikt kleiner ist als die Länge (L32) des zentralen Kastens (32a).

7. Achse (10a, 10b) nach einem der vorhergehenden Ansprüche, **dadurch gekennzeichnet, dass** der zweite Tragarm (34a) an einer seiner Außenwände mindestens ein Auffangelement (52a, 54a) für Druck oder Kräfte hat, die sich auf die Achse (10a, 10b) ausüben, wobei das oder jedes Auffangelement (52a, 54a) dazu geeignet ist, in Kontakt mit einer Innenwand des Führungskastens (33a) zu stehen.

8. Achse (10a, 10b) nach einem der vorhergehenden Ansprüche, **dadurch gekennzeichnet, dass** das rechteckige Rohr (45a) oder der erste Tragarm (36a) auf einer seiner Außenwände mindestens ein Auffangelement (51a, 510a, 53a, 55a) für Druck oder Kräfte hat, die sich auf die Achse (10a, 10b) ausüben, wobei das oder jedes Auffangelement (51a, 510a, 53a, 55a) dazu geeignet ist, in Kontakt mit einer Innenwand des ersten Tragarms (36a) oder einer Innenwand des zentralen Kastens (32a) zu stehen.

9. Achse (10a, 10b) nach einem der vorhergehenden Ansprüche, **dadurch gekennzeichnet, dass** der zentrale Kasten (32a), der Führungskasten (33a), der erste Tragarm (36a) und der zweite Tragarm (34a) jeweils einem im Wesentlichen rechteckigen Querschnitt aufweisen.

10. Fahrzeug (1), insbesondere vom Typ Hubarbeitsbühne, das bzw. die mit einem Fahrgestell (14) ausgestattet ist, **dadurch gekennzeichnet, dass** es bzw. sie auch mit einer Achse (10a, 10b) nach einem der vorhergehenden Ansprüche ausgestattet ist, wobei die oder jede Achse (10a, 10b) am Fahrgestell (14) des Fahrzeugs (1) montiert ist.

## Claims

1. An axle (10a, 10b) mounted on a chassis (14) of a vehicle (1), the axle (10a, 10b) comprising a central box (32a), a first support arm (36a) connected to a first wheel (30a) of the vehicle and slidingly mounted inside the central box (32a), and a second support arm (34a) connected to a second wheel (28a) of the vehicle (1), the second support arm (34a) being longitudinally translatable inside the first support arm (36a), **characterized in that** the axle (10a, 10b) also includes a guide box (33a) fastened to the central box (32a), the guide box (33a) comprising a rectangular tube (45a) and defining an outer annular volume (Ve) comprised between the central box (32a) and the tube (45a), and an inner volume (Vi) comprised inside the tube (45a), the first support arm (36a) being received inside the outer annular volume (Ve) and being able to be guided by the guide box (33a) along a first longitudinal translation path, the second support arm (34a) being received inside the inner volume (Vi) and being able to be guided by the guide box (33a) along a second longitudinal translation path.

2. The axle (10a, 10b) according to claim 1, **characterized in that** it comprises at least one actuator (40a, 42a), preferably a cylinder, forming a means for translating at least one of the first (36a) and second (34a) support arms, and the or each actuator (40a, 42a) extends along the longitudinal translation axis.

3. The axle (10a, 10b) according to claim 2, **characterized in that** it comprises a first cylinder (42a) and a second cylinder (40a), respectively forming means for translating the first support arm (36a) and means for translating the second support arm (34a), the first (42a) and second (40a) cylinders respectively being fastened to the first (36a) and second (34a) support arms each at least at a first respective fastening point (64a).

4. The axle (10a, 10b) according to claim 3, **characterized in that** the first (42a) and second (40a) cylinders extend inside the inner volume (Vi) of the guide box (33a) and **in that** at least one cylinder (40a, 42a) is fastened to the rectangular tube (45a) at least at one second fastening point (70a).

5. The axle (10a, 10b) according to claim 3, **characterized in that** the first (42a) and second (40a) cylinders extend outside the central box (32a) and **in that** at least one cylinder (40a, 42a) is fastened to the central box (32a) at least at one second fastening point (66a).

6. The axle (10a, 10b) according to any one of the preceding claims, **characterized in that** the guide box (33a) has a length (L33) strictly smaller than the length (L32) of the central box (32a).

7. The axle (10a, 10b) according to any one of the preceding claims, **characterized in that** the second support arm (34a) comprises, on one of its outer walls, at least one support element (52a, 54a) withstanding pressure or forces exerted on the axle (10a, 10b), the or each support element (52a, 54a) being able to be in contact with an inner wall of the guide box (33a).

8. The axle (10a, 10b) according to any one of the preceding claims, **characterized in that** the rectangular tube (45a) or the first support arm (36a) comprises, on one of the outer walls, at least one support element (51a, 510a, 53a, 55a) withstanding pressure or forces exerted on the axle (10a, 10b), the or each support element (51a, 510a, 53a, 55a) being able to be in contact with an inner wall of the first support arm (36a), or an inner wall of the central box (32a).

9. The axle (10a, 10b) according to any one of the preceding claims, **characterized in that** the central box (32a), the guide box (33a), the first support arm (36a) and the second support arm (34a) each have a substantially rectangular cross-section.

10. A vehicle (1), in particular of the aerial lift type, equipped with a chassis (14), **characterized in that** it is also equipped with at least one axle (10a, 10b) according to any one of the preceding claims, the or each axle (10a, 10b) being mounted on the chassis (14) of the vehicle (1).
